# EUROPEAN PATENT SPECIFICATION

(11) **EP 1 349 150 B1**
(45) Date of publication and mention of the grant of the patent: **24.10.2007**
(21) Application number: 03006767.2
(22) Date of filing: 25.03.2003
(51) Int. Cl.: G11B 5/48

(54) **Actuator for hard disk drive**
Betätiger für ein Festplattenlaufwerk
Actionneur pour un disque dur

(30) Priority: 25.03.2002 KR 2002016088
(43) Date of publication of application: 01.10.2003
(73) Proprietor: SAMSUNG ELECTRONICS CO., LTD., Suwon-City, Kyungki-do (KR)
(72) Inventor: Choi, Il-yeon, Yangcheon-gu, Seoul (KR)
(74) Representative: Grünecker, Kinkeldey, Stockmair & Schwanhäusser Anwaltssozietät

(56) References cited:
- US-A1- 2001 033 461
- PATENT ABSTRACTS OF JAPAN vol. 2000, no. 23, 10 February 2001 (2001-02-10) & JP 2001 155447 A (OGAWA:KK; OGAWA NORIAKI; SHOGATSU HIROSHI; YAMADA PRECISION KK; OTSUKA), 8 June 2001 (2001-06-08)
- PATENT ABSTRACTS OF JAPAN vol. 2000, no. 21, 3 August 2001 (2001-08-03) & JP 2001 110151 A (OGAWA:KK; OGAWA NORIAKI; SHOGATSU HIROSHI), 20 April 2001 (2001-04-20)

## Description

### BACKGROUND OF THE INVENTION

### 1. Field of the Invention

The present invention relates to a hard disk drive, and more particularly, to an actuator of a hard disk drive having a structure to reinforce a coupling force between an actuator arm and a molding portion.

### 2. Description of the Related Art

A hard disk drive (HDD) is one of auxiliary memory devices to read out and record data from and on a magnetic disk by using a magnetic head.

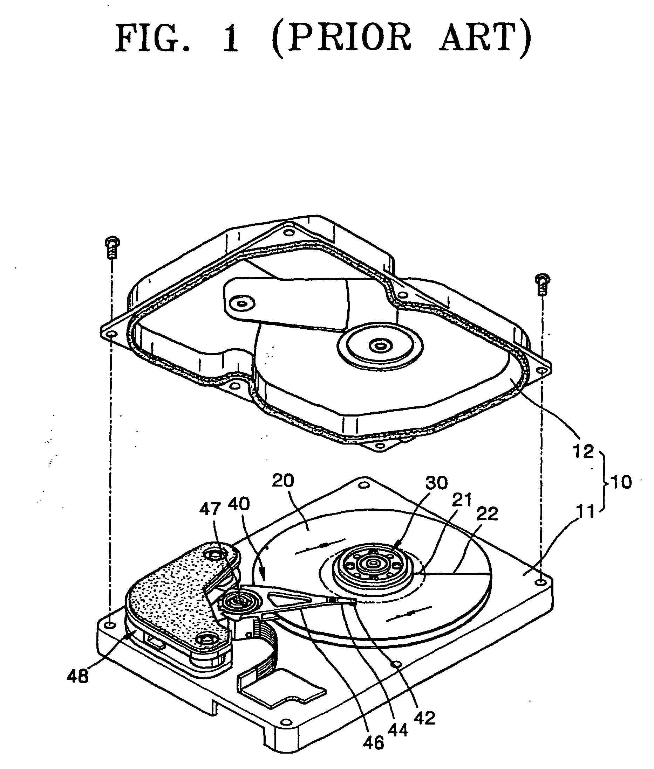

FIG. 1 is a perspective view showing a conventional hard disk drive. Referring to the drawing, a conventional hard disk drive incudes a housing 10, a magnetic disk (hard disk) 20 which is a recording medium installed in the housing 10, a spindle motor 30 installed on a base plate 11 of the housing 10 to rotate the disk 20, and an actuator 40 having a magnetic head for recoding/reading out data

The housing 10 is installed in a main body of a computer and includes the base plate 11 for supporting the spindle motor 30 and the actuator 40, and a cover plate 12 coupled to the base plate 11 for enclosing and protecting the disk 20. The housing 10 is typically manufactured of a stainless and aluminum material.

The disk 20 is a recording medium for data recording and a single or a plurality of disks are installed to be separated a predetermined distance from each other and capable of being rotated by the spindle motor 30. A landing zone 21 is provided at the inner circumferential side of the disk 20, where a slider 42 on which a magnetic head (not shown) is mounted is accommodated when the power is turned off. A data zone 22 where data is stored is provided outside the landing zone 21.

The actuator 40 includes an actuator arm 46 installed to be capable of pivoting around a pivot shaft 47 provided on the base plate 11, the slider 42 where the magnetic head is mounted, and a suspension 44 installed at one end portion of the actuator arm 46 for supporting the slider 42 to be elastically biased toward the surface of the disk 20. Reference numeral 48 indicates a voice coil motor for pivoting the actuator arm 46.

In the conventional hard disk drive having the above structure, when the power is turned off, the slider 42 is accommodated in the landing zone 21 of the disk 20 by an elastic force of the suspension 44. When the power is turned on, the disk 20 starts to rotate and then lift is generated by air pressure. Accordingly, the slider 42 is lifted. The slider 42 being lifted is moved to the data zone 22 of the disk 20 by the pivot of the actuator arm 46 of the actuator 40. The slider 42 in the data zone 22 maintains a lifted state at a height where the lift by the rotation of the disk 20 and the elastic force by the suspension 44 are balanced. Thus, the magnetic head mounted on the slider 42 records and reads out data with respect to the disk 20 while maintaining a predetermined distance from the disk 20 that is rotating.

In the hard disk drive, as described above, a single, or a plurality of disks are installed. Conventionally, four or more disks are installed in the hard disk drive to increase a data storage capacity. Recently, as a surface recording density of a disk sharply increases, one or two disks can store a sufficient amount of data. In particular, a hard disk drive in a method of using a single disk and recording data on one or both side surfaces thereof has been researched and developed. In this case, since only one or two magnetic heads are needed, the actuator has one or two actuator arms and a low profile actuator having a relatively low height is used therefor.

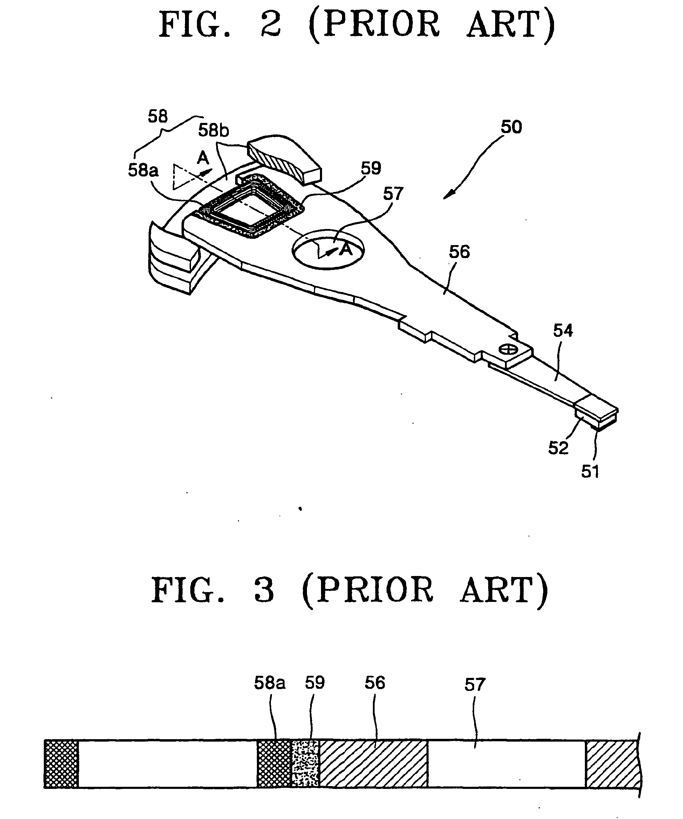

FIG. 2 is a perspective view showing a conventional low profile actuator. FIG. 3 is an enlarged sectional view taken along line A-A of FIG. 2.

Referring to FIG. 2 and 3, a conventional low profile actuator 50 has an actuator arm 56 where a pivot hole 57 is provided in the middle portion thereof. A suspension 54 for supporting the slider 52 to be elastically biased toward the surface of a disk (not shown) is instated at one end portion of the actuator arm 56. A coil 58a of a voice coil motor 58 is coupled to the other end portion of the actuator arm 56. A magnet 58b of the voice coil motor 58 is installed above and under the coil 58a to be separated a predetermined distance from each other and to face each other.

In the meantime, the actuator arm 56 is manufactured by press processing and stamping.processing a metal material, for example, an aluminum plate. The coil 58a is coupled to the other end portion of the actuator arm 56 by interposing a molding portion 59 therebetween. That is, the molding portion 59 is formed by injecting plastic resin between the coil 58a and the actuator arm 56 so that the coil 58a is fixedly coupled to the actuator arm 56 by an adhesive force between the molding portion 59 and each of the coil 58a and the actuator arm 56.

The actuator 50 having the above structure is controlled by a servo control system (not shown) and moves in a direction according to the Fleming's left hand rule by the interaction between current input to the coil 58a and a magnetic field formed by the magnet 58b. Here, the directions in which the actuator 50 pivots according to the direction of the current applied to the coil 58a by the servo control system can be changed very quickly and the speed of movement of the magnetic head 51 is an important factor for determining a seek time of the hard disk drive. Thus, for better performance, it is advantageous to generate a strong force (torque) by a sufficient amount of the current and a sufficient intensity of the magnetic field.

During which the hard disk drive is driven, an operation of instantaneously changing the direction in which the actuator 50 pivots to move the magnetic head 51 to a desired position is repeated. A vibration having a variety of frequencies and amplitude is generated at the actuator 50 by the above direction changing operation. Such vibration finally acts as a factor for vibrating the magnetic head 51. When the magnetic head 51 vibrates, a position error signal (PES) increases, which consequently affects a function of the magnetic head 51 performing, read/write along a track formed on the disk. Thus, since the performance of a hard disk drive can be improved by minimizing the vibration, the dynamic characteristic of each part must be designed to be optimal and a coupling state between the respective parts must be firmly maintained.

In the conventional actuator 50, however, since a contact surface between the actuator arm 56 and the molding portion 59 to couple the coil 58a to the actuator arm 56 is simply flat, the coupling force therebetween is weak. Thus, when vibration is generated at the actuator 50, the molding portion 59 is easy to be separated partially from the actuator arm 56. Accordingly, the vibration of the actuator 50 increases and the performance of the magnetic head 51 deteriorates. Also, the molding portion 59 can be detached from the actuator arm 56 by an impact applied when the actuator 50 is manufactured or the hard disk drive is assembled or delivered. As the coupling state between the molding portion 59 and the actuator arm 56 becomes worse, a resonance frequency of the actuator 50 tends to decrease. When the resonance frequency decreases to be out of a range of being controlled by the servo control system, a normal operation of the actuator 50 is not possible. In particular, in the low profile actuator 50, since the thickness of the actuator arm 56 is very thin, a contact area between the molding portion 59 and the actuator arm 56 is small so that the above problems becomes severe.

In the meantime, U.S. Patent No. 5,165,090 discloses a swing type actuator in which a groove is formed at the outer circumferential surface of a coil to increase a fixed strength between the coil and a hold member. However, it is difficult to form a groove at the outer circumferential surface of the coil which requires an additional step. Also, the above method may be suitable for a case in which the coil is directly coupled to the hold member manufactured with thermoplastic resin. However, it is difficult to apply the above method to an arm manufactured with a metal material such as aluminum as in the case described with reference to FIGS. 2 and 3.

US-A-2001/0033461 discloses machining of an actuator periphery to reduce resonance vibration. The actuator is manufactured by extruding or casting, wherein the profile dimension is greater than a desired final profile dimension. The peripheral surface is then machined to the desired final profile dimension. The peripheral surface after machining has a number of recesses wherein one reason for such recesses may be to decrease weight of the corresponding actuator.

It is an object of the present invention to provide an actuator for a hard disk drive having a structure to reinforce a coupling force between an actuator arm and molding portion by increasing a contact area in horizontal and vertical directions of the actuator arm and molding portion to realize a stable operation of the actuator.

To achieve the above object, there is provided an actuator of a hard disk drive with the features of claim 1.

Advantageous embodiments are disclosed by the subclaims.

The above object and advantages of the present invention will become more apparent by describing in detail preferred embodiments thereof with reference to the attached drawings in which:
FIG. 1 is an exploded perspective view of a conventional hard disk drive;
FIG. 2 is a perspective view of a conventional low profile actuator;
FIG. 3 is an enlarged sectional view of a coil portion taken along line A-A of FIG. 2;
FIG. 4 is an exploded perspective view of an actuator of a hard disk drive according to a preferred embodiment of the present invention;
FIG. 5 is a sectional view of a coil portion taken along line B-B of FIG. 4; and
FIG. 6 is a plan view of a modified example of the protrusions shown in FIG. 4.

### DETAILED DESCRIPTION OF THE INVENTION

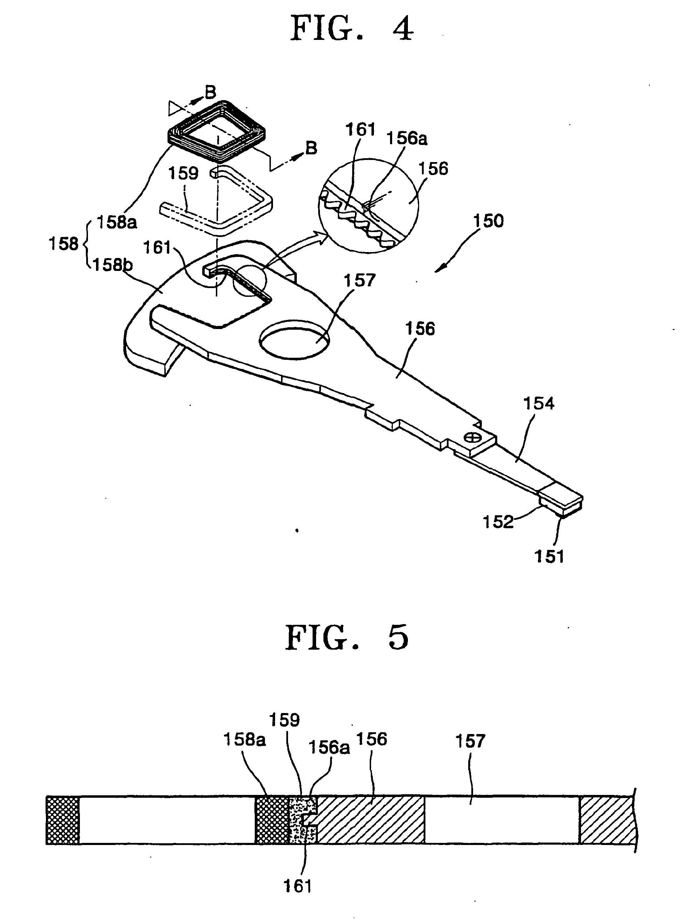

Referring to FIGS. 4 and 5, an actuator 150 of a hard disk drive according to the present invention is an apparatus for moving a magnetic head 151 to a predetermined position on a disk (not shown) to record or read out data with respect to the disk. The actuator 150 includes an actuator arm 156 installed on a base plate (hot shown) of the hard disk drive to be capable of pivoting. For this purpose, a pivot hole 157 is formed at the middle portion of the actuator arm 156. A slider 152, on which the magnetic head 151 is mounted, it is supported by a suspension 154 to elastically bias the magnetic head toward the surface of the disk.

Reference numeral 158 indicates a voice coil motor 158 to pivot the actuator arm 156. The voice coil motor 158 includes a coil 158a coupled to the other end portion of the actuator arm 156 by interposing a molding portion 159 therebetween, and a magnet 158b arranged to be separated a predetermined distance from the coil 158a and face the bottom surface of the coil 158a. A permanent magnet is used as the magnet 158b and installed on the base plate of the hard disk drive. In the meantime, although FIG. 4 shows that only one magnet 158b is installed, as shown in FIG. 2, the magnet can be installed above the coil 158a to face the upper surface of the coil 158a.

The actuator arm 156 is manufactured by press processing or stamping processing a metal material such as an aluminum plate. The molding portion 159 is used to couple the coil 158a to the other end portion of the actuator arm 156 and formed by injecting plastic resin between the coil 158a and the actuator arm 156. Here, according to the present invention, a plurality of protrusions 161 protruding toward the molding portion 159 are formed at a contact surface 156a of the actuator arm 156 contacting the molding portion 159. The protrusions 161 can be formed at the same time when the actuator arm 156 is manufactured. That is, the protrusions 161 can be simultaneously formed when an aluminum plate is press-processed or stamping-processed to manufacture the actuator arm 156. Thus, an additional step to form the protrusions 161 is not needed.

In detail, as shown in the drawings, the protrusions 161 have a saw-toothed shape and are sequentially formed in the lengthwise direction of the contact surface 156a. Also, the protrusions 161 can be formed to be separated a predetermined distance from one another and to be partially or over the entire contact surface 156a. A contact area between the molding portion 159 and the actuator arm 156 in horizontal and vertical directions is increased by the protrusions 161 so that a coupling force therebetween is reinforced. Also, since the protrusions 161 restricts a relative movement of the molding portion 159 and the actuator arm 156 in the horizontal direction, the molding portion 159 is prevented from being separated from the actuator arm 156 by a vibration or impact in the horizontal direction. Thus, since the vibration of the actuator arm 150 due to a defective coupling state between the molding portion 159 and the actuator arm 156 is reduced, a position error signal (PES) is reduced and a stable operation of the magnetic head 151 can be guaranteed, thus improving performance of the hard disk drive

Preferably, each of the protrusions 161 has a thickness thinner than that of the actuator arm 156 and is formed at the vertically middle portion of the contact surface 156a. Thus, the upper and lower surfaces of the respective protrusions 161 are encompassed by the molding portion 159. Such a structure surely prevent the molding portion 159 from being detached from, the actuator arm 156 by a vibration or impact in the vertical direction

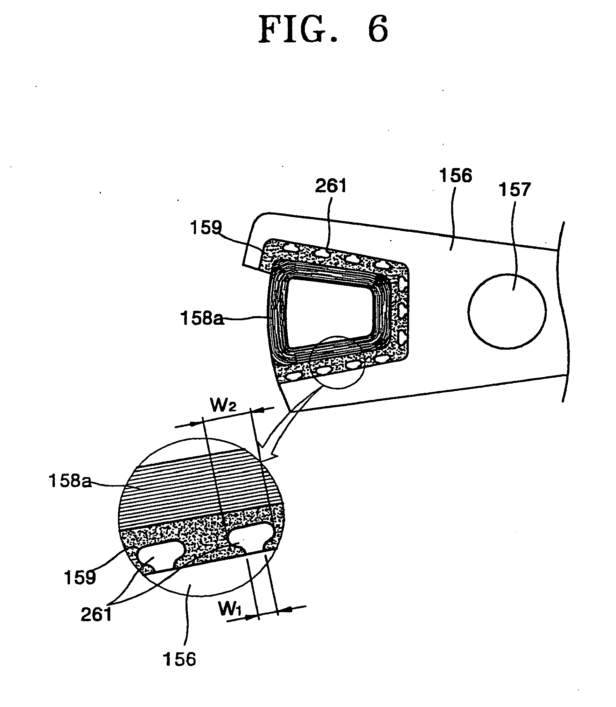

FIG. 6 shows a modified example of the protrusions shown in FIG. 4. In FIG. 6, the same reference numerals as those of FIG. 4 indicate the same constituent members.

Referring to FIG. 6, each of protrusions 261 has a shape in which a width W₂ of a protruding end portion thereof is greater than that W₁ of a base end portion thereof. That is, each of the protrusions 261 has a shape in which a portion close to the contact surface 156a of the actuator arm 156 has a,narrower width while a portion of the protrusion inserted deep in the molding portion 159 has a wider width. Also, instead of the shape shown in FIG. 6, the protrusions 261 can have a variety of shapes such as a reverse triangle shape, meeting the condition that the width W2 of the protrusion end portion is wider than the width W1 of the base end portion.

The protrusions 261 having the above shapes can increase a contact area between the molding portion 159 and the actuator arm 156 in the horizontal and vertical directions, which is quite effective in preventing the molding portion 159 from being detached from the actuator arm 156 by a vibration or impact in the horizontal direction. Also, as described above, the protrusions 261 shown in FIG. 6 can be formed simultaneously when the actuator arm 156 is manufactured.

As described above, according to the actuator of a hard disk drive according to the present invention, since a contact area between the molding portion and the actuator arm in the horizontal and vertical directions is increased, a coupling force therebetween is increased. Thus, since the vibration of the actuator due to a defective coupling state between the molding portion and the actuator arm is reduced, a position error signal decreases and a stable operation of the magnetic head can be guaranteed so that performance of the hard disk drive is improved. Further, the separation of the molding portion from the actuator arm due to the vibration in the horizontal and vertical directions or an external impact can be prevented. Since the protrusions formed at the actuator arm can be simultaneously formed when the actuator arm is manufactured, an additional step is not needed.

While this invention has been particularly shown and described with reference to preferred embodiments thereof, it will be understood by those skilled in the art that various changes in form and details may be made therein without departing from the spirit and scope of the invention as defined by the appended claims. For example, although an actuator having a single actuator arm is described in the above preferred embodiment, it is obvious that the present invention can be applied to an actuator having two or more actuator arms. Also, it is obvious that the protrusion can have a variety of shapes so long as the shape satisfies the conditions needed to achieve the purpose of the present invention.

## Claims

1. An actuator (150) for a had disk drive for moving a magnetic head (151) to a predetermined position on a disk (20) to record and read out data on and from the disk, the actuator comprising:
an actuator arm (156);
a suspension (154) at one end portion of the actuator arm (156) for supporting a slider (152) on which the magnetic head (151) is mounted, and
a voice coil motor (158) having a coil (158a) coupled to the other end portion of the actuator arm (156) by interposing a molding portion (159) therebetween and at least one magnet (158b) arranged to be separated a predetermined distance from the coil (158), **characterized in that** a plurality of protrusions (161, 261) are provided at a contact surface (156a) of the actuator arm (156) protruding toward and contacting the molding portion (159) to increase the contact area between both in horizontal and vertical direction, wherein said protrusions (161, 261) are formed at the vertically middle portion of the contact surface (156a) and have a thickness thinner than that of the actuator arm (156).

2. The actuator according to claim 1, **characterized in that** a pivot hole (157) is formed in the middle portion of the actuator arm (156).

3. The actuator according to claim 1 or 2, **characterized in that** said magnet (158b) is arranged to face at least one surface of an upper surface and a bottom surface of said coil (158a).

4. The actuator according to one of the previous claims, **characterized in that** the protrusions (161, 261) are formed in a length wise direction of the contact surface (156a) in particular at predetermined intervals.

5. The actuator according to one of the previous claims, **characterized in that** the protrusions (161) are continuously formed in a lengthwise direction of the contact surface (156a).

6. The actuator according to one of the previous claims, **characterized in that** the protrusions (161) have a saw-toothed shape.

7. The actuator according to one of the previous claims, **characterized in that** the protrusions (261) are formed with a width (W₂) of a protruding end portion of each protrusions greater than a width (W₁) of a base end portion thereof.

8. The actuator according to one of the previous claims, **characterized in that** the protrusions (161, 261) are arranged in at least one row in lengthwise direction of the contact surface (156a).

9. The actuator according to one of the previous claims, **characterized in that** the protrusions (161, 261) are formed of the same material as the actuator arm (156).

## Patentansprüche

1. Betätigungselement (150) für ein Festplattenlaufwerk zum Bewegen eines Magnetkopfes (151) zu einer vorbestimmten Position auf einer Platte (20) zum Aufzeichnen und Auslesen von Daten auf und von der Platte, wobei das Betätigungselement aufweist:
einen Betätigungsarm (156);
eine Aufhängung (154) an einem Endbereich des Betätigungsarms (156) zum Halten eines Gleitelementes (152), an dem der Magnetkopf (151) befestigt ist, und
einen Schwingspulenmotor (158) mit einer Spule (158a), die mit dem anderen Endbereich des Betätigungsarms (156) verbunden ist, indem ein Formbereich (159) zwischen diesen eingefügt wird, und wenigstens einem Magneten (158b), der derart angeordnet ist, dass er um einen vorbestimmten Abstand von der Spule (158) getrennt positioniert ist,
**dadurch gekennzeichnet, dass**
mehrere Vorsprünge (161, 261) an einer Kontaktfläche (156a) des Betätigungsarms (156) vorgesehen sind, die in Richtung des Formbereichs (159) vorstehen und diesen berühren, um die Kontaktfläche zwischen beiden in horizontaler und vertikaler Richtung zu vergrößern, wobei die Vorsprünge (161, 261) an dem vertikalen mittleren Bereich der Kontaktfläche (156a) ausgebildet sind und eine Dicke aufweisen, die dünner als diejenige des Betätigungsarms (156) ist.

2. Betätigungselement nach Anspruch 1, **dadurch gekennzeichnet, dass** ein Schwenkloch (157) in dem mittleren Bereich des Betätigungsarms (156) ausgebildet ist.

3. Betätigungselement nach Anspruch 1 oder 2, **dadurch gekennzeichnet, dass** der Magnet (158b) derart angeordnet ist, dass er wenigstens eine Fläche einer oberen Fläche und einer unteren Fläche der Spule (158a) zugewandt ist.

4. Betätigungselement nach einem der vorhergehenden Ansprüche, **dadurch gekennzeichnet, dass** die Vorsprünge (161, 261) in einer Längsrichtung der Kontaktfläche (156a) insbesondere in vorbestimmten Intervallen ausgebildet sind.

5. Betätigungselement nach einem der vorhergehenden Ansprüche, **dadurch gekennzeichnet, dass** die Vorsprünge (161) kontinuierlich in einer Längsrichtung der Kontaktfläche (156a) ausgebildet sind.

6. Betätigungselement nach einem der vorhergehenden Ansprüche, **dadurch gekennzeichnet, dass** die Vorsprünge (161) eine Sägezahnform aufweisen.

7. Betätigungselement nach einem der vorhergehenden Ansprüche, **dadurch gekennzeichnet, dass** die Vorsprünge (261) derart ausgebildet sind, dass eine Breite (W₂) eines vorstehenden Endbereichs jedes Vorsprungs größer als eine Breite (W₁) eines Basisendbereichs derselben ist.

8. Betätigungselement nach einem der vorhergehenden Ansprüche, **dadurch gekennzeichnet, dass** die Vorsprünge (161, 261) in wenigstens einer Reihe in Längsrichtung der Kontaktfläche (156a) angeordnet sind.

9. Betätigungselement nach einem der vorhergehenden Ansprüche, **dadurch gekennzeichnet, dass** die Vorsprünge (161, 261) aus dem gleichen Material wie der Betätigungsarm (156) hergestellt sind.

## Revendications

1. Actionneur (150) pour un disque dur permettant de déplacer une tête magnétique (151) jusqu'à une position prédéterminée sur un disque (20) de façon à enregistrer et lire des données sur le disque, l'actionneur comprenant :
un bras actionneur (156) ;
une suspension (154) une partie d'extrémité du bras d'actionneur (156), pour supporter un patin (152) sur lequel est montée la tête magnétique (151), et
un moteur à bobine mobile (158) ayant une bobine (158a) couplée à l'autre partie d'extrémité du bras d'actionneur (156) en intercalant une pièce moulée (159) entre elles, et au moins un aimant (158b) agencé de façon à être séparé de la bobine (158) d'une distance prédéterminée, **caractérisé en ce qu'**il est prévu sur une surface de contact (156a) du bras d'actionneur (156) une pluralité de saillies (161, 261) faisant saillie vers et en contact avec la pièce moulée (159) de façon à accroître l'aire de contact entre elles à la fois dans la direction horizontale et dans la direction verticale, lesdites saillies (161, 261) étant formées dans la partie verticalement centrale de la surface de contact (156a) et ayant une épaisseur inférieure à celle du bras actionneur (156).

2. Actionneur selon la revendication 1, **caractérisé en ce qu'**un trou de pivot (157) est formé dans la partie centrale du bras actionneur (156).

3. Actionneur selon la revendication 1 ou 2, **caractérisé en ce que** ledit aimant (158b) est agencé de manière à être en face d'au moins une surface parmi une surface supérieure et une surface inférieure de ladite bobine (158a).

4. Actionneur selon l'une quelconque des revendications précédentes, **caractérisé en ce que** les saillies (161, 261) sont formées dans une direction longitudinale de la surface de contact (156a), en particulier à des intervalles prédéterminés.

5. Actionneur selon l'une quelconque des revendications précédentes, **caractérisé en ce que** les saillies (161) sont formées de manière continue dans une direction longitudinale de la surface de contact (156a).

6. Actionneur selon l'une quelconque des revendications précédentes, **caractérisé en ce que** les saillies (161) ont une forme en dents de scie.

7. Actionneur selon l'une quelconque des revendications précédentes, **caractérisé en ce que** les saillies (261) sont formées en présentant une largeur (W₂) d'une partie d'extrémité saillante de chaque saillie qui est supérieure à une largeur (W₁) d'une partie d'extrémité de base de celle-ci.

8. Actionneur selon l'une quelconque des revendications précédentes, **caractérisé en ce que** les saillies (161, 261) sont agencées en au moins une rangée dans une direction longitudinale de la surface de contact (156a).

9. Actionneur selon l'une quelconque des revendications précédentes, **caractérisé en ce que** les saillies (161, 261) sont formées dans la même matière que le bras d'actionneur (156).
